# EUROPEAN PATENT APPLICATION

(11) **EP 1 133 044 A2**
(43) Date of publication of application: **12.09.2001**
(21) Application number: 01200824.9
(22) Date of filing: 06.03.2001
(51) Int. Cl.: H02K 1/17, H02K 1/27, H01F 41/02

(54) **Plastoferrite magnetic profile suitable to act as a magnet in generators and electric motors**

(30) Priority: 08.03.2000 IT MI000456
(71) Applicant: INDUSTRIE ILPEA S.p.A., 21023 Malgesso (Varese) (IT)
(72) Inventor: Bianchi, Roberto, 21020 Daverio (Varese) (IT); Manzoni, Luca, 21020 Casciago (Varese) (IT)
(74) Representative: De Gregori, Antonella

(57) **Abstract**

The present invention relates to a plastoferrite magnetic profile suitable to act as the magnet in generators and electric motors characterised in that it is formed by extrusion with substantially convex section.

## Description

Strips of plastoferrite, consisting of a mixture of ferrite powder with elastomeric and/or plastic products, are already used as magnets, for example in motors for fans and in flywheels for motorcycles.

According to said known technique, the plastoferrite is produced in flat sheets which are sheared into strips of suitable dimensions.

The latter are then bent into a circular shape and inserted inside the housing of the generator/electric motor to which they are applied.

Fixing of the magnetic profile to the housing can be obtained by applying a layer of adhesive or double-sided tape on the side of the profile designed to be coupled with the housing.

However, bending of the plastoferrite strip into a circular shape to be applied to the housing causes deformation of its flat section resulting in curvature (warping) in the central area of the strip in its operating position around the housing.

This deformation leads to a number of problems.

The first is that obviously an air gap forms as there is no adhesion between magnet and wall of the flywheel or fan housing in the central part of the strip of magnet that has deformed. During operation of the generator/motor this therefore results in a reduction of the electrical signal in that area which in the end causes a drop in performance of the generator/motor due to leakage of the signal.

Furthermore the deformation of the profile on the opposite side with respect to the housing produces a further variable air gap between rotor and stator which can be avoided only by internal boring of the profile. This, however, entails a drop in performance due to the lack of uniformity in thickness of the bored profile, and additional costs due to the further machining required.

Again due to the warping in the central area of the strip of plastoferrite wrapped around the housing, another problem is created, that of difficulty in metering the amount of glue necessary for fixing the strip, with consequent uncertain mechanical bond. An incorrect amount of glue, in fact, produces an unreliable mechanical bond. The problem is further aggravated if double-sided tape is used, due to its thinness.

The aim of the present invention is essentially to solve the technical problems summarised above.

For this purpose, the present invention proposes a plastoferrite magnetic profile suitable to act as the magnet in generators/electric motors provided with housing, characterised in that it is formed by extrusion with substantially convex section.

In order to better describe the characteristics and advantages of the invention, an example of practical implementation is described with reference to the figures of the attached drawings. Said example is non-restrictive.

With reference to said drawings, the figures from 1 to 3 refer to the known technique, while the figures from 4 to 6 refer to the invention.

Figures 1 and 4 show sectioned perspective views of a plastoferrite profile according to the known technique and according to the invention respectively.

Figures 2 and 5 represent cross sections taken from figures 3 and 6 respectively along lines II-II and V-V.

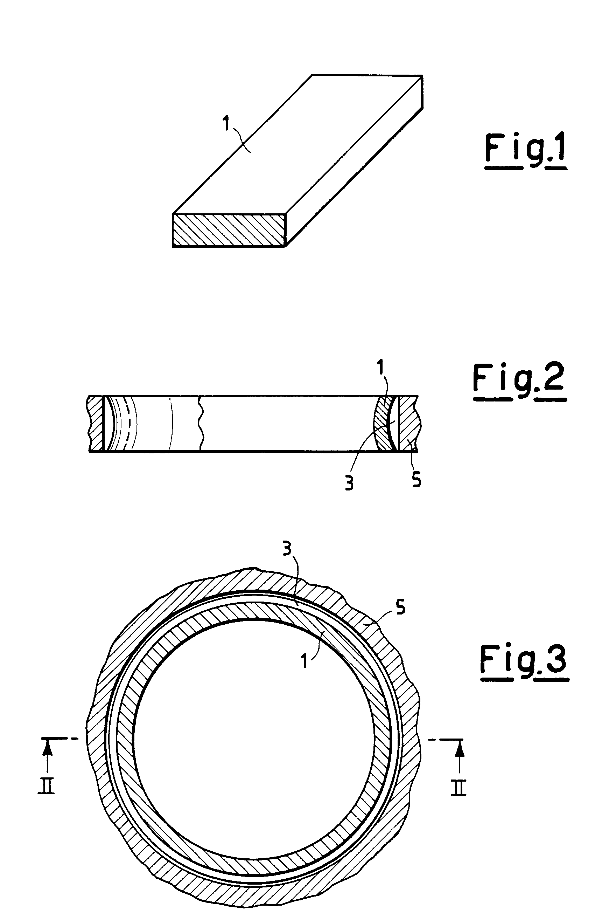

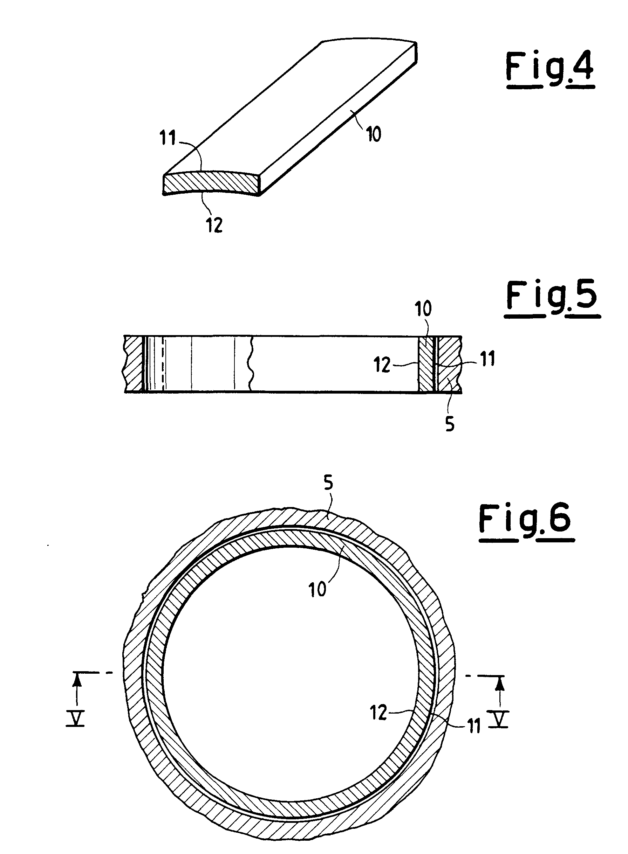

Finally, figures 3 and 6 represent cross sections that show, in operating position, the coupling between a plastoferrite profile and a metal housing of an electric generator.

Figure 1 shows a plastoferrite profile 1 according to the known technique.

It is obtained by shearing a flat sheet into a strip. The resulting section is therefore rectangular.

Figures 2 and 3 show profile 1 in operating position applied to a metal housing 5, for example a fan motor.

As can be seen from figure 2, when shaped into a circular form, the plastoferrite profile 1 bends centrally so that, in the operating position, adequate contact occurs with the internal surface of the housing 5 only at the ends of the profile 1, while the central "warping" causes the formation of an undesired air gap, defined 3 in figure 2.

Figure 4 shows a plastoferrite profile 10 according to the invention, produced by extrusion with convex section, obtained by bending of the opposed long sides 11 and 12 in the profile section.

Figures 5 and 6 show the profile 10 of the invention applied to the metal housing 5, on the convex side 11.

As can be seen, in the operating position with profile 10 bent in a circular shape, said profile, thanks to its convex section, is able to adhere uniformly at all points on its face 11 to the internal surface of the housing 5.

This eliminates the air gap 3 in the middle which occurs in the case of fig. 2 and 3.

As previously explained, the effect of the invention is multiple. In addition to eliminating, as shown in the drawings, the possibility of discontinuity between rotor and stator where there is no adhesion between magnet and wall of the housing, the invention also solves the problem of metering of the glue (or double-sided tape) when envisaged as the means of adhesion between magnetic strip and wall of the housing with which it is designed to co-operate.

Since in the operating position, contact and adhesion are uniform at all points between profile of the invention and housing, the risk of an uncertain mechanical bond between the two pieces is also eliminated. Similarly the flattened profile opposite the housing avoids the formation of a variable rotor/stator air gap on the section, and therefore avoids corrections by means of boring. The thickness of the material is therefore maintained constant and performance is thus improved.

## Claims

1. Plastoferrite magnetic profile suitable to act as the magnet in generators or electric motors provided with housing **characterised in that** it is formed by extrusion with substantially convex section.

2. Profile according to claim 1, **characterised in that** said convex section is obtained by bending of the longest opposed sides of said section of the profile.

3. Profile according to claim 1, **characterised in that** said profile is operatively applied to said housing by wrapping the profile around the inside of said housing so that said convex section is facing towards said housing.
